# EUROPÄISCHE PATENTSCHRIFT

(11) **EP 0 396 925 B1**
(45) Veröffentlichungstag und Bekanntmachung des Hinweises auf die Patenterteilung: **25.08.1993**
(21) Anmeldenummer: 90107007.8
(22) Anmeldetag: 11.04.1990
(51) Int. Cl.: B65G 17/14, B65G 17/00, B65G 17/34

(54) **C- Förderer**
C-Conveyor
Convoyeur C

(30) Priorität: 09.05.1989 DE 3915074
(43) Veröffentlichungstag der Anmeldung: 14.11.1990
(73) Patentinhaber: NERAK GMBH FÖRDERTECHNIK, 30938 Burgwedel (DE)
(72) Erfinder: Siemsen, Horst, D-3006 Burgwedel 2 (DE)
(74) Vertreter: Thömen, Uwe, Dipl.-Ing.

(56) Entgegenhaltungen:
- DE-B- 1 246 548
- DE-B- 2 212 850
- FR-A- 2 123 099

## Beschreibung

Die Erfindung betrifft einen C-Förderer gemäß dem Oberbegriff des Patentanspruchs 1.

Zum Transport unterschiedlicher Stückgüter wie Pakete, Kanister, in Folie verpackte Pakete, unverpakte Produkte usw. werden bekanntlich in zunehmendem Maße Förderer eingesetzt, um die Stückgüter in möglichst kurzer Zeit von einem ersten zu einem zweiten Ort zu befördern. Dabei kommt es vornehmlich auch darauf an, im Verlauf des Förderweges einen Höhenunterschied zu überwinden.

Es gibt mehrere Typen von Förderer, die sich dadurch auszeichnen, daß sie das Stückgut in vertikaler Richtung auf einem Fördertisch transportieren, um längs des Förderweges einen Höhenunterschied zu überwinden. Das in einer Aufgabestation zugeführte Stückgut wird also vertikal transportiert und kann danach in einer Entnahmestation entnommen oder auch weitergefördert werden.

Der gattungsgemäße C-Förderer zeichnet sich dadurch aus, daß die Förderrichtung in der oberen Entnahmestation entgegengesetzt zur Förderrichtung verläuft, mit der das Stückgut auf der unteren Aufgabestation zugeführt wird. Demgegenüber verlaufen die Förderrichtungen bei einem sogenannten S-Förderer in der Aufgabe- und Entnahmestation in gleicher Richtung.

Sowohl beim C-Förderer als auch beim S-Förderer sind die Fördertische beidseitig mit einem Tischriemen versehen, an denen Stützplatten befestigt sind, die eine Teilung der Fördertische festlegen. Zwischen einander gegenüberliegenden zugeordneten Stützplatten erstrecken sich Tragstäbe zur Bildung einer zur Aufnahme der Stückgüter geeigneten Tischfläche.

Durch diese Ausgestaltung ist es möglich, die Fördertische in ihrer eingentlichen vertikalen Förderrichtung in querstabiler Form auszubilden, wobei gleichzeitig gewährleistet ist, daß der Fördertisch über Umlenkrollen geführt werden kann, so daß die einzelnen Fördertische endlos umlaufen.

Die Fördertische werden an ihren äußeren Tischkanten jeweils über Haltestäbe getragen, wobei sich der eine Haltestab zwischen inneren und der andere Haltestab zwischen äußeren Antriebselementen erstreckt, um den Fördertisch in Förderrichtung bewegen zu können. Im Hinblick auf die Führung und Umlenkung der inneren und äußeren Antriebselemente ergeben sich dabei für den S-Förderer keine Probleme. Insbesondere bereitet es keine Schwierigkeiten, sowohl die Tischriemen als auch die inneren und äußeren Antriebselemente über die unteren und oberen Umlenkrollen zu führen, um die Fördertische endlos umlaufen zu lassen.

DE-A-2.212.850 offenbart einen S-Förderer mit ähnlichen Aufbau, der im wesentlichen die Merkmale des Oberbegriffs aufweist.

Demgegenüber muß bei dem gattungsgemäßen C-Förderer von dem die Erfindung ausgeht, beachtet werden, daß die Förderrichtungen in der unteren Aufgabestation und der oberen Entnahmestation entgegengesetzt verlaufen. Dies hat zur Folge, daß die inneren und äußeren Antriebselemente des Fördertisches in Bezug auf die Tischriemen ihre Lage um 180° ändern, wenn der Fördertisch in seiner oberen querstabilen Lage in der Entnahmestation durch die zugeordneten Umlenkrollen umgelenkt wird.

Im Vergleich der Tischriemen einerseits zu den inneren und äußeren Antriebselementen andererseits in ihrer relativen Lage zueinander in der unteren Aufgabestation verändern die inneren und äußeren Antriebselemente nach Verlassen der oberen Entnahmestation nämlich ihre relative Lage zu dem Tischriemen, und zwar in der Weise, daß die inneren und äußeren Antriebselemente jetzt auf ihrem Rücken liegen. Ihre zunächst obere Seite befindet sich jetzt also unten, während die obere Seite des Tischriemens weiterhin auch oben bleibt.

Dieser sich bei einem C-Förderer zwangsläufig ergebende Sachverhalt ist nun so lange nicht weiter von Bedeutung, als die Haltestäbe genau in der Mitte der inneren und äußeren Antriebselemente angeordnet sind. In diesem Fall ist es nämlich unerheblich, wenn die inneren und äußeren Antriebselemente bei den oberen Umlenkrollen ihre Position ändern und die zuvor obere Seite nun zur unteren Seite wird.

Eine solche mittige und symmetrische Anordnung der Haltestäbe läßt sich ohne weiteres erzielen, wenn für die Antriebselemente in an sich bekannter Weise Stahlketten verwendet werden, welche die Halte stäbe mittig aufnehmen.

Allerdings führt die Verwendung solcher Stahlketten zu erheblichen Nachteilen bei einem C-Förderer. Als ungünstig ist vor allem zu erwähnen, daß die Stahlketten während des Betriebes erhebliche Geräusche verursachen und damit zu einer Lärmbelästigung führen. Hierbei ist zu berücksichtigen, daß die C-Förderer vornehmlich in geschlossenen Hallen eingesetzt werden, so daß sich die Geräusche besonders störend bemerkbar machen. Außerdem können die Gelenke der Stahlketten leicht ausschlagen, so daß neben der dadurch bedingten zusätzlichen Lärmbelästigung ein Verschleiß eintritt.

Zur Vermeidung dieser Nachteile ist es zwar an sich bekannt, an Stelle von Stahlketten für die inneren und äußeren Antriebselemente Gummizahnriemen zu verwenden, die durch Stahlseileinlagen verfestigt sind. Solche Gummizahnriemen bewirken eine wesentliche Reduzierung der Lärmbelästigung im Vergleich mit den Stahlketten.

Während sich solche Gummizahnriemen bei einem S-Förderer, wo der Förderweg bei der unteren Aufgabestation und der oberen Entnahmestation in gleicher Richtung verläuft, problemlos verwenden lassen, ist der Einsatz dieser vorteilhaften Gummizahnriemen bei einem C-Förderer bisher nicht möglich gewesen. Dies ist darauf zurückzuführen, daß sich die Haltestäbe der Fördertische bei einem Gummizahnriemen nicht mittig und symmetrisch anordnen lassen, wie dies bei den erwähnten Stahlketten der Fall ist. Da bei einem C-Förderer eine solche mittige Anordnung aber stets vorausgesetzt wurde, konnten die Gummizahnriemen hier bislang nicht zum Einsatz kommen.

Hier greift nun die Erfindung ein, der die Aufgabe zugrunde liegt, einen C-Förderer zu schaffen, der geräuscharm und weitgehend frei von Verschleiß betrieben werden kann.

Dieses Ziel erreicht die Erfindung bei dem im Oberbegriff des Patentanspruchs 1 vorausgesetzten C-Förderer durch die Merkmale des kennzeichnenden Teils des Patentanspruchs 1.

Durch die besondere Ausbildung der vorderen Stützplatten sowie durch die vorgesehenen Langlöcher für die vorderen Haltestäbe und ferner durch die ein Ausweichen der Stützplatten nach oben verhindernden Halteschienen ist es mit der Erfindung erstmals möglich, bei einem C-Förderer für die Antriebselemente die vorteilhaften Gummizahnriemen zu verwenden. Dabei wird durch die Gummizahnriemen ein leiser und zudem über lange Zeiten wartungsfreier und verschleißarmer Betrieb des C-Fördrers ermöglicht.

Von besonderer Bedeutung sind die erwähnten Langlöcher, die während der Umlenkung zumindest der äußeren Gummizahnriemen einen gewissen Längenausgleich ermöglichen. Die Ursache dieses Längenausgleichs liegt darin, daß die inneren und äußeren Gummizahnriemen nach dem Verlassen der oberen Entnahmestation relativ zu dem Tischriemen wegen der Umlenkung durch die Umlenkrollen eine umgekehrte Lage einnehmen und auf ihrem Rücken liegen. Wegen des Aufbaues der Gummizahnriemen sind die Haltestäbe nicht mittig und symmetrisch an den Gummizahnriemen befestigt, weshalb im oberen Umkehrpunkt der Gummizahnriemen eine relative Verschiebung zwischen dem Tischriemen einerseits und dem Gummizahnriemen andererseits erfolgt, und bei der Erfindung wird durch die Langlöcher ein Ausgleich dieser Verschiebung ermöglicht.

Die Halteschienen verhindern dabei, daß sich die Tischfläche des Fördertisches wegen der Verdrehnung der äußeren Gummizahnriemen relativ zum Tischriemen nach oben hin wölben kann. Vielmehr wird durch die Halteschienen eine Zwangsführung gewährleistet, welche die Tischfläche im Bereich der oberen Entnahmestation in ihrer waagerechten Lage hält.

Zweckmäßige Ausgestaltungen und vorteilhafte Weiterbildungen der Erfindung ergeben sich auf den Unteransprüchen und der nachfolgenden Beschreibung.

Anhand der in der Zeichnung dargestellten Ausführungsbeispiele wird die Erfindung im folgenden näher erläutert. Es zeigen:
- Fig. 1: eine schematische Ansicht eines C-Förderers in einer Seitenansicht,
- Fig. 2: eine Vorderansicht des C-Förderers gemäß Fig. 1,
- Fig. 3: einen Schnitt längs der Schnitt linie C - D in Fig. 1 zur Verdeutlichung der unteren Lange eines Fördertisches und der inneren und äußeren Gummizahnriemen,
- Fig. 4: eine Draufsicht eines Fördertisches in seiner waagerechten querstabilen Lage,
- Fig. 5: einen Schnitt längs der Schnittlinie A - B in Fig. 4,
- Fig. 6: einen Schnitt längs einer anderen Schnittlinie E - F in Fig. 4,
- Fig. 7: eine Detail-Darstellung (X aus Fig. 1) eines Fördertisches im Bereich der oberen Umlenkung der Entnahmestation,
- Fig. 8: einen Schnitt längs der Schnittlinie E - F in Fig. 7, und
- Fig. 9 - 12: jeweils eine Vorder- und Seitenansicht unterschiedlicher Stützplatten mit einem Versatz.

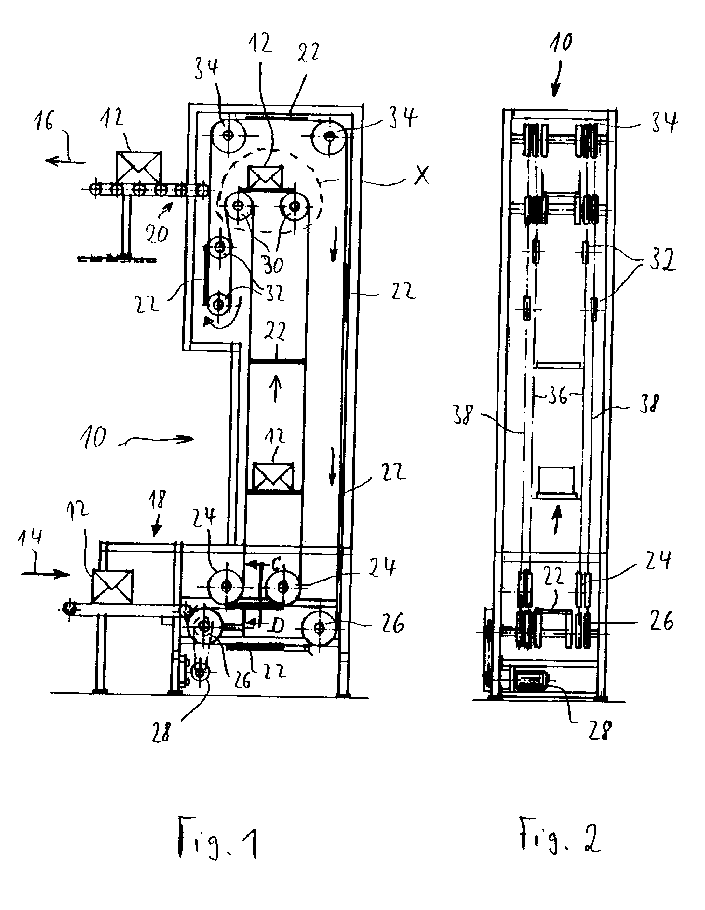

Fig. 1 und 2 verdeutlichen in einer schematischen Darstellung den grundsätzlichen Aufbau eines C-Förderers 10 zur Förderung von Stückgüter 12. Die Stückgüter werden in einer Aufgaberichtung 14 in einer Aufgabestation 18 zugeführt und gelangen dabei auf einen von mehreren Fördertischen 22, der sich in der Aufgabestation 18 in seiner waagerechten querstabilen Lage befindet.

Die Stückgüter 12 werden dann mittels des in seiner waagerechten Lage bleibenden Fördertisches 22 nach oben zu einer Entnahmestation 20 gefördert, wo sie in der durch den Pfeil angedeuteten Förderrichtung 16 entnommen werden. Wie man erkennen kann, verlaufen die Aufgaberichtung 14 einerseits und die Förderrichtung 16 andererseits entgegengesetzt zueinander.

Nach der Entnahme des Stückguts 12 in der oberen Entnahmestation 20 wird der zuvor waagerecht ausgerichtete querstabile Fördertisch 22 über Umlenkrollen 30, 32 umgelenkt und über weitere Umlenkrollen 34 wieder nach unten zur Aufgabestation 18 geführt, wo sich untere Umlenkrollen 24 und 26 befinden. Für den Antrieb der Fördertische 22 bzw. der die Fördertische 22 tragenden inneren Gummizahnriemen 36 und äußeren Gummizahnriemen 38 ist ein Antrieb 28 vorgesehen.

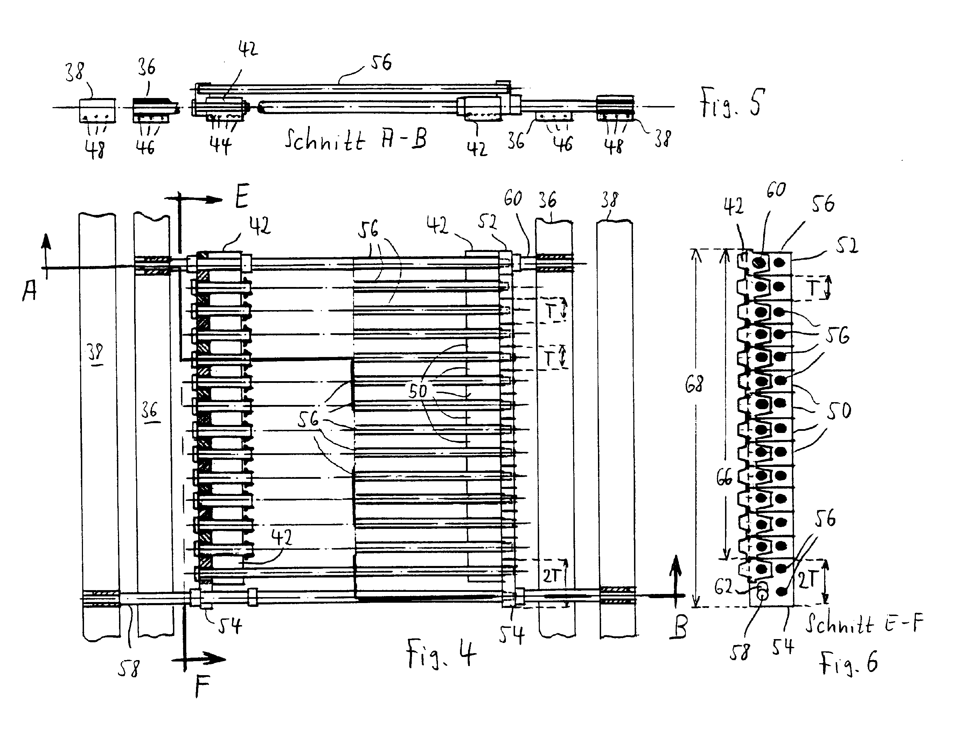

Fig. 3 zeigt eine teilweise Schnittansicht längs der Schnittlinie C - D in Fig. 1 im Bereich der unteren Aufgabestation 18, und Fig. 4 - 6 verdeutlichen zusätzlich den Aufbau eines Fördertisches 22.

Der Fördertisch 22 bzw. dessen Tischfläche zur Aufnahme von Stückgüter 12 wird durch eine Vielzahl von Tragstäben 56 gebildet, die an ihren äußeren Enden jeweils in mittleren Stützplatten 50 sowie einer hinteren Stützplatte 52 und einer vorderen Stüztplatte 54 gehalten sind. Die Stützplatten 50, 52 definieren jeweils eine Teilung T, während die vordere Stützplatte 54 eine Teilung 2T festlegt. Die Stützplatten 50 - 54 sind ihrerseits an den beiden äußeren, aus Gummi bestehenden Tischriemen 42 einzeln befestigt, so daß der Fördertisch 22 in Fig. 3 über die zugeordnete Tischumlenkrolle 40 geführt und umgelenkt werden kann.

Die hintere Stützplatte 52 nimmt zusätzlich noch einen hinteren Haltestab 60 auf, dessen beiden Enden durch die inneren Gummizahnriemen 36 aufgenommen werden, wodurch die hintere Tischkante des Fördertisches 22 getragen wird.

In ähnlicher Weise nehmen die vorderen Stützplatten 54 einen vorderen Haltestab 58 auf, und die beiden Enden dieses Haltestabes 58 sind in den äußeren Gummizahnriemen 38 gehalten. Die äußeren Gummizahnriemen 38 tragen also die vordere Tischkante des Fördertisches 22.

Wie Fig. 3 verdeutlicht, werden die Gummizahnriemen 36 im Bereich der unteren Aufgabestation 18 über Umlenkrollen 26 umgelenkt. Entsprechend dem zahnförmigen Profil der Gummizahnriemen 36 und 38 sind die Umlenkrollen ebenfalls mit einer Verzahnung ausgebildet.

Gemäß der Darstellung in Fig. 3 sind die Tischriemen 42 jeweils mit einer Einlage 44 in Form von Stahlseilen versehen, und auch die Gummizahnriemen 36 bzw. 38 besitzen Stahlseileinlagen 46 bzw. 48. Alle drei Einlagen 44, 46 und 48 befinden sich in Fig. 3 im Bereich der unteren Aufgabestation 18 in gleicher Weise im unteren Teil der zugeordneten jeweiligen Gummizahnriemen.

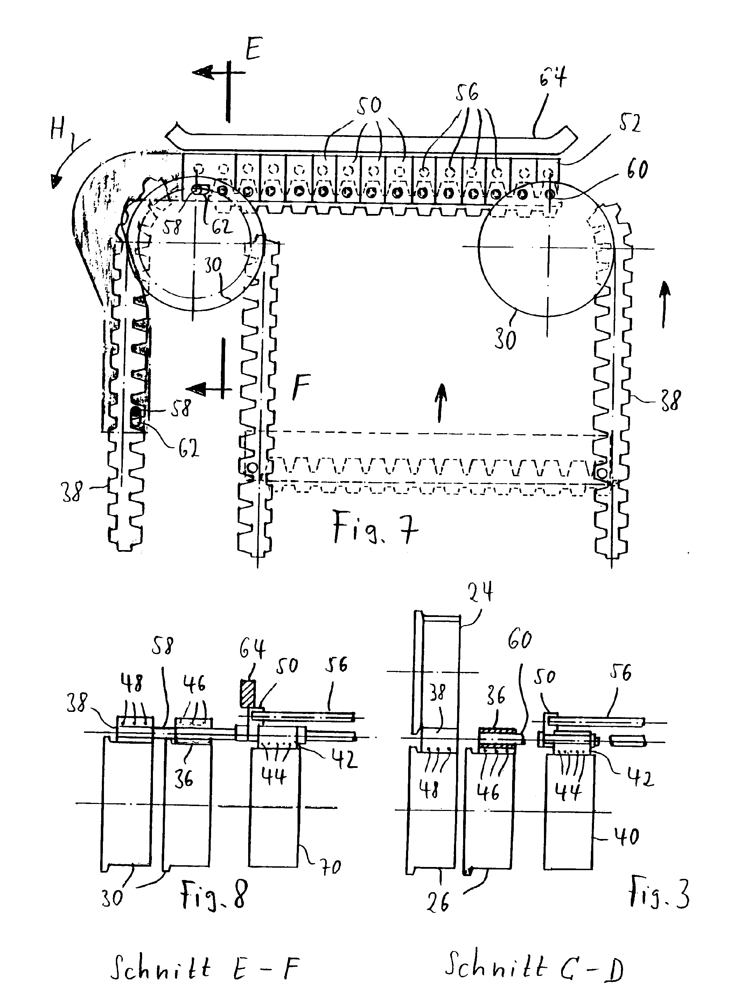

Fig. 7 zeigt in einer Detail-Darstellung den in Fig. 1 mit X gekennzeichneten Bereich des C-Förderers, wo sich der Fördertisch 22 noch in seiner waagerechten querstabilen Lage befindet und anschließend durch die Umlenkrollen 30 bzw. die Tischumlenkrolle 70 umgelenkt wird, wie dies durch den Pfeil H angedeutet ist.

Entsprechend der Schnittansicht gemäß Fig. 8 längs der Schnittlinie E - F in Fig. 7 gelangen dabei die inneren und äußeren Gummizahnriemen 36, 38 in ihre Rückenlage, d.h., die Einlagen 46 bzw. 48 liegen nunmehr oben, während die Einlagen 44 der Tischriemen 42 nach wie vor ihre untere Position beibehalten.

Dieser Wechsel der Lage der inneren und äußeren Gummizahnriemen 36, 38 in ihre Rückenlage führt auch zu einer örtlichen Lageänderung des vorderen Haltestabes 58 relativ zu den Tragstäben 56, die sich bei der Umlenkung in Richtung des Pfeiles H bemerkbar macht. Diese örtliche Lageänderung im Bezug auf die Haltestäbe 56 macht sich zuerst bei dem vorderen Haltestab 58 bemerkbar, der als erster umgelenkt wird. Der hintere Haltestab 60 wird deshalb vernachlässigt.

Wie in der Querschnittsansicht gemäß Fig. 6 zu erkennen ist, welche einen Schnitt längs der Schnittlinie E - F in Fig. 4 zeigt, besitzt die vordere Stützplatte 54 die doppelte Länge 2T der übrigen Stützplatten, deren Länge entsprechend der Teilung T ausgebildet ist. Die vordere Stützplatte 54 trägt also zwei jeweils im Abstand einer Teilung T angeordnete Tragstäbe 56.

Wegen der im Vergleich zu den übrigen Stützplatten 50 größeren Länge der vorderen Stützplatte 54 ist auch die gesamte Tischlänge 68 größer als die Länge des Tischriemens 66, wie man deutlich in Fig. 6 erkennen kann.

In neuartiger Weise ist nun der vordere Haltestab 58 jeweils in einem Langloch 62 der beiden vorderen Stützplatten 54 geführt, wobei sich die Langlöcher 62 unterhalb der Tragstäbe 56 befinden. Durch die Langlöcher 62 wird eine Bewegung des vorderen Haltestabes 58 relativ zu den vorderen Stützplatten 54 ermöglicht, und durch diese Bewegungsfreiheit läßt sich der Fördertisch 22 gemäß Fig. 7 problemlos umlenken, obwohl der äußere Gummizahnriemen 38 bei der Umlenkung in seine Rückenlage gelangt.

Hierzu verdeutlich die Darstellung gemäß Fig. 7, daß sich der vordere Haltestab 58 in der oberen waagerechten querstabilen Lage des Fördertisches 22 zunächst im vorderen Teil des Langloches 62 befindet, während der vordere Haltestab 58 nach der Umlenkung eine entgegengesetzte Lage am hinteren Ende des Langloches 62 einnimmt.

Im Zusammenhang damit, daß der äußere Gummizahnriemen 38 bei der Umlenkung seine Rückenlage einnimmt, hat der Fördertisch 22 das Bestreben, nach oben hin auszuweichen. Um ein solches Ausweichen zu verhindern, sind ferner in neuartiger Weise zu beiden Seiten des Fördertisches 22 im Bereich der Stützplatten 50 jeweils Halteschienen 64 ortsfest angeordnet. Durch diese Halteschienen ist gewährleistet, daß der Fördertisch 22 in der oberen Entnahmestation 20 seine waagerechte Lage beibehält und sich nicht nach oben hin krümmen kann, wenn die inneren und äußeren Gummizahnriemen 36, 38 über die Umlenkrollen 30 und der Tischriemen 42 über die Tischumlenkrolle 70 umgelenkt werden.

Wegen der Langlöcher 62 in den vorderen Stützplatten 54 und infolge der Halteschienen 64 ist es möglich, bei dem C-Förderer in vorteilhafter Weise Gummizahnriemen einzusetzen, die sich durch einen geringen Geräuschpegel auszeichnen und sehr wartungsarm und praktisch verschleißfrei sind.

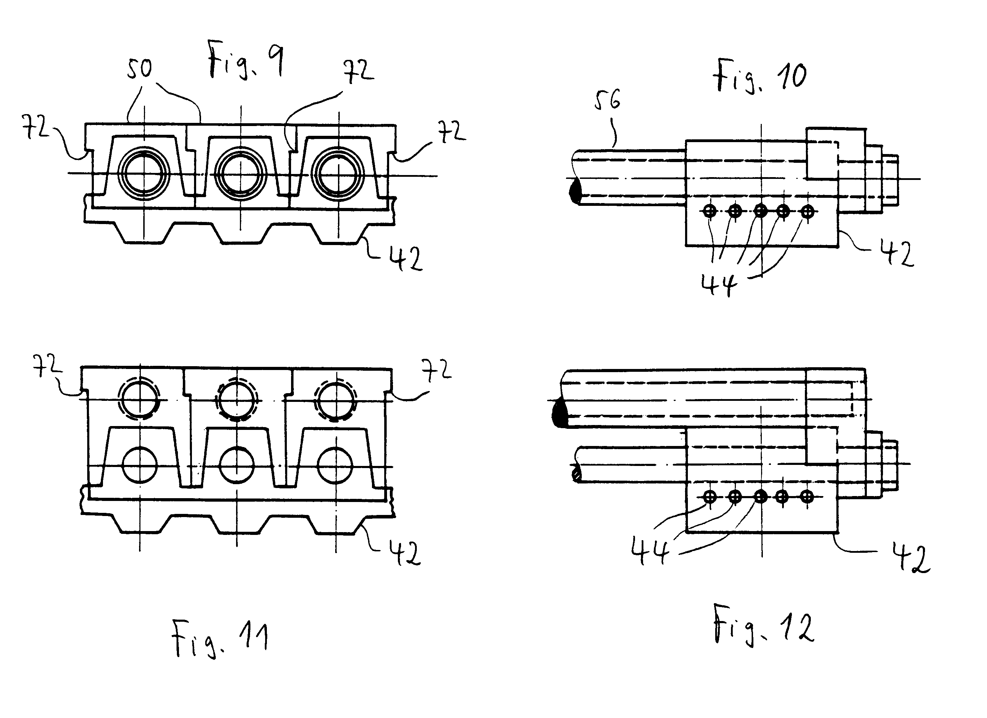

Fig. 9, 10 sowie Fig. 11, 12 zeigen jeweils in einer Vorder- und Seitenansicht die Verwendung von Stützplatten 50, die mit einem Versatz 72 versehen sind. Durch den jeweiligen Versatz 72 wird eine Relativbewegung zwischen benachbarten Stützplatten 50 weitgehend ausgeschlossen, so daß sich diese Stützplatten 50 auch für besonders schwere Stückgüter 12 eignen, wenn sich der Fördertisch 22 in seiner waagerechten Position befindet. Im übrigen sind die Versätze 72 so ausgebildet, daß die Umlenkung des Fördertisches 22 nach Verlassen der oberen Entnahmestation 20 nicht behindert wird.

Zum besseren Verständnis von Fig. 4 und 8 ist noch darauf hinzuweisen, daß die inneren Gummizahnriemen 36 an der Stelle, an welcher sich der vordere Haltestab 58 bis zu den äußeren Gummizahnriemen 38 erstreckt, mit einer entsprechenden Ausnehmung bzw. Aussparung versehen sind.

## Patentansprüche

1. C-Förderer, mit mindestens einem in einer ersten Richtung abrollbaren bzw. umlenkbaren und in einer anderen Richtung querstabilen Fördertisch (22), der beidseitig mit einem Tischriemen (42) versehen ist, an denen Stützplatten (50, 52, 54) befestigt sind, welche eine Teilung (T) der Fördertische (22) festlegen, wobei sich zwischen gegenüberliegenden Stützplatten (50, 52, 54) Tragstäbe (56) zur Bildung einer Tischfläche erstrecken, ferner mit einem inneren und äußeren Antriebselement (36, 38) an beiden Seiten des Fördertisches (22), wobei die inneren Antriebselemente (36) die eine Tischkante und die äußeren Antriebselemente (38) die andere Tischkante über je einen von den äußeren Stützplatten (52, 54) getragenen Haltestab (58, 60) tragen, ferner mit einer unteren Aufgabestation (18) für ein Fördergut (12) und einer oberen Entnahmestation (20), in denen sich der Fördertisch (22) in seiner querstabilen waagerechten Lage befindet, sowie mit unteren und oberen Umlenkrollen (24, 26; 30, 32, 34) für die inneren und äußeren Antriebselemente (36, 38), so daß der Fördertisch (22) endlos zwischen der Aufgabe- und Entnahmestation (18; 20) umläuft, dadurch gekennzeichnet, daß die inneren und äußeren Antriebselemente und der Tischriemen (42) durch mit Stahlseileinlagen (44, 46, 48) oder dergleichen verfestigte Gummizahnriemen (36; 38) gebildet sind, daß die vorderen Stützplatten (54), welche die in der Entnahmestation (20) in Förderrichtung vordere Tischkante mittels des vorderen Haltestabes (58) tragen, länger als es einer Teilung (T) entspricht ausgebildet sind, daß der vordere Haltestab (58) in sich in Förderrichtung waagerecht erstreckenden Langlöchern (62) der beiden vorderen Stützplatten (54) gehalten ist, und daß in der oberen Entnahmestation (20) im Bereich der Stützplatten (50, 52, 54) des Fördertisches (22) an beiden Seiten je eine Halteschiene (64) ortsfest angeordnet ist, welche ein Ausweichen der Stützplatten (50, 52, 54) nach oben verhindern.

2. C-Förderer nach Anspruch 1, dadurch gekennzeichnet, daß die Länge der vorderen Stützplatten (54) einer doppelten Teilung (2T) entspricht, und daß die vorderen Stützplatten (54) neben dem vorderen Haltestab (58) zwei im Raster der Teilung (T) angeordnete Tragstäbe (56) aufnehmen.

3. C-Förderer nach Anspruch 2, dadurch gekennzeichnet, daß sich das Langloch (62) unterhalb des Befestigungspunktes des vordersten Tragstabes (56) befindet.

4. C-Förderer nach Anspruch 3, dadurch gekennzeichnet, daß die Tischlänge (68) des Fördertisches (22) größer als die Länge (66) des Tischriemens (42) ist, wobei der Längenunterschied dem Maß einer Teilung (T) entspricht.

5. C-Förderer nach einem der vorhergehenden Ansprüche 1 - 4, dadurch gekennzeichnet, daß die Stützplatten (50, 52, 54) jeweils einen Versatz (72) aufweisen und somit versetzt und verdrehsicher aneinanderliegen.

## Claims

1. C-conveyor comprising at least one conveying table (22), which can be unrolled and deflected in a first direction and is transversely stable in another direction, which is equipped at both sides with a table strap (42), to which are fixed support plates (50, 52, 54) which determine a spacing (T) of the conveying table (22), support bars (56) extending between mutually opposite support plates (50, 52, 54) to form a table surface, comprising furthermore an inner and outer drive element (36, 38) at both sides of the conveying table (22), the inner drive elements (36) carrying the one table edge and the outer drive elements (38) the other table edge, each via a holding bar (58, 60) carried by the outer support plates (52, 54), comprising furthermore a lower feed station (18) for a conveyed object (12) and an upper discharge station (20), in which stations the conveying table (22) is situated in its transversely stable, horizontal position, and comprising also lower and upper guide rollers (24, 26; 30, 32, 34) for the inner and outer drive elements (36, 38), so that the conveying table (22) circulates endlessly between the feed and discharge stations (18; 20), characterized in that the inner and outer drive elements and the table strap (42) are formed of rubber toothed belts (36; 38) reinforced with steel cable inlays (44, 46, 48) or the like, that the front support plates (54), which carry the table edge which is at the front in the conveying direction in the discharge station (20) by means of the front holding bar (58), have a length greater than that corresponding to one spacing (T), that the front holding bar (58) is held in elongate holes (62), extending horizontally in the conveying direction, of the two front support plates (54), and that in the upper discharge station (20), in the region of the support plates (50, 52, 54) of the conveying table (22) at each side, a holding rail (64) is stationarily mounted, which prevents an upward displacement of the support plates (50, 52, 54).

2. C-conveyor according to Claim 1, characterized in that the length of the front support plates (54) is equal to a double spacing (2T), and that the front support plates (54) receive, in addition to the front holding bar (58), two support bars (56) disposed at the pitch of the spacing (T).

3. C-conveyor according to Claim 2, characterized in that the elongate hole (62) is situated below the fixing point of the foremost support bar (56).

4. C-conveyor according to Claim 3, characterized in that the table length (68) of the conveying table (22) is greater than the length (66) of the table strap (42), the difference in length being equal to the dimension of one pitch (T).

5. C-conveyor according to one of the preceding Claims 1 to 4, characterized in that the support plates (50, 52, 54) each have an offset (72) and thus bear against one another offset and secured against rotation.

## Revendications

1. Convoyeur C avec au moins un plateau transporteur (22), déroulable ou retournable dans une première direction et à stabilité transversale dans une autre direction, qui est pourvue, sur ses deux côtés, de courroies de plateau (42), auxquelles sont fixées des plaques d'appui (50, 52, 54), qui déterminent une division (T) des plateaux transporteurs (22), des barres porteuses (56) s'étendant entre deux plaques d'appuis opposées (50, 52, 54) pour former une surface de plateau, avec encore un élément d'entraînement intérieur et extérieur (36, 38) sur les deux côtés du plateau transporteur (22), les éléments d'entraînement intérieurs (36) portant l'un des deux bords du plateau et les éléments d'entraînement extérieurs (38) portant l'autre bord du plateau, respectivement par l'intermédiaire d'une barre de soutien (58, 60) portée par les plaques d'appui extérieures (52, 54), et avec un poste de chargement inférieur (18) pour l'objet à transporter (12) et un poste de déchargement supérieur (20), postes dans lesquels le plateau transporteur (22) est en position horizontale et transversalement stable, ainsi que des poulies de renvoi inférieures et supérieures (24, 26; 30, 32, 34) pour les éléments d'entraînement intérieurs et extérieurs (36, 38), de manière que le plateau transporteur (22) tourne sans fin entre les postes de chargement et de déchargement (18; 20), caractérisé en ce que les éléments d'entraînement intérieurs et extérieurs et la courroie de plateau (42) sont des courroies dentées caoutchoutées (36; 38) solidifiées par des inserts de câble en acier ou similaires, en ce que les plaques d'appui avant (54) qui portent le bord du plateau se trouvant, au poste de déchargement (20), devant dans la direction de transport, au moyen de la barre de soutien avant (58), sont plus longues qu'une division (T), en ce que la barre de soutien avant (58) est retenue dans des trous oblongs horizontaux dans la direction de transport des deux plaques d'appui avant (54), et en ce qu'au poste de déchargement supérieur (20), dans la région des plaques d'appui (50, 52, 54) du plateau transporteur (22), soient disposés, sur chaque côté de manière stationnaire, des rails de retenue qui empêchent un échappement des plaques d'appui (50, 52, 54) vers le haut.

2. Convoyeur C suivant la revendication 1, caractérisé en ce que la longueur des plaques d'appui avant (54) correspond à une double division (2T) et en ce que les plaques d'appui avant (54) reçoivent, outre la barre de soutien avant (58), deux barres porteuses (56) disposées dans la trame de la division (T).

3. Convoyeur C suivant la revendication 2, caractérisé en ce que le trou oblong (62) se trouve sous le point de fixation de la barre porteuse (56), la plus en avant.

4. Convoyeur C suivant la revendication 3, caractérisé en ce que la longueur de plateau (68) du plateau transporteur (22) est supérieure à la longueur (66) de la courroie de plateau (42), la différence de longueur correspondant à la mesure d'une division (T).

5. Convoyeur C suivant l'une des revendications précédentes 1 à 4, caractérisé en ce que les plaques d'appui (50, 52, 54) présentent respectivement un déport (72) et donc reposent les unes contre les autres de manière déportée et protégées contre la torsion.
